# EUROPEAN PATENT APPLICATION

(11) **EP 4 518 086 A1**
(43) Date of publication of application: **05.03.2025**
(21) Application number: 23794877.3
(22) Date of filing: 22.03.2023
(51) Int. Cl.: H02J 7/00, H02J 7/02, H02M 1/42, H02M 7/02, H02M 7/219

(54) **POWER CIRCUIT AND POWER ADAPTER**

(30) Priority: 25.04.2022 CN 202220987159 U
(71) Applicant: Ace Power and Technology Co.,Ltd, Shanghai 201313 (CN)
(72) Inventor: WANG, Yuetian, Shanghai 201313 (CN)
(74) Representative: Murgitroyd & Company
(86) International application number: PCT/CN2023/083093
(87) International publication number: WO 2023/207442

(57) **Abstract**

The present application provides a power circuit and a power adapter. The power circuit comprises a power input end, a power factor correction module, a DC-DC conversion module, and a power output end which are connected in sequence. The power factor correction module comprises an input rectifier unit, a first inductor, a first diode, a first capacitor, a power switch transistor, and a rheostat unit. According to the present application, the height of an overcurrent protection point can be adjusted, such that the problem that the over-current protection point is set too low to meet the full-power output of the power circuit is solved.

## Description

### TECHNICAL FIELD

The present disclosure relates to power technologies, and more particularly, to a power circuit and a power adapter.

### BACKGROUND

A high-power power adapter generally adopts a topology of a power factor correction (PFC) circuit for a switching direct current (DC) boost topology plus a LLC resonance circuit. For the Boost PFC circuit, the maximum current will be extracted from an on-board alternating current (AC) source in any of the following two conditions: when a power protection point is exceeded; and when the circuit is in a startup process. In each of the two conditions, the maximum current is determined by an overcurrent protection point of the Boost PFC circuit.

### SUMMARY OF THE INVENTION

### TECHNICAL PROBLEM

On one hand, in order to ensure the full power output of the high-power power adapter, the overcurrent protection point of the Boost PFC circuit should not be set too low. On the other hand, the maximum current during the startup process is limited by the overcurrent protection point of the Boost PFC circuit. In order to ensure that the on-board AC source will not trigger overcurrent protection, the overcurrent protection point of the Boost PFC circuit should not be set too high. Conventionally, the requirement that the overcurrent protection point of the Boost PFC circuit should not be set too low or too high cannot be met.

### TECHNICAL SOLUTION

The present disclosure provides a power circuit and a power adapter capable of adjusting the level of the overcurrent protection point in a circuit based on the operation condition of the circuit, thereby solving a problem that the overcurrent protection point is set too low to implement full power output of a power circuit.

In a first aspect, the present disclosure provides a power circuit, comprising a power input terminal, a power factor correction module, a DC-DC conversion module, and a power output terminal connected in sequence;

the power factor correction module comprising an input rectifier unit, a first inductor, a first diode, a first capacitor, a power switch transistor and a rheostat unit, wherein the first inductor is connected to a positive electrode of the first diode in series and then connected to a first output node of the input rectifier unit, both terminals of the first capacitor are connected to a negative electrode of the first diode and a second output node of the input rectifier unit, respectively, and the power switch transistor and the rheostat unit are connected in series and then connected between the positive electrode of the first diode and the second output node;

wherein when a start of the power factor correction module is completed, a resistance value of the rheostat unit is changed from a first resistance value to a second resistance value which is less than the first resistance value.

In a possible implementation of the present disclosure, the rheostat unit further comprises a first switch transistor, a first resistor, and a switch enable control part, a first terminal and a second terminal of the first switch transistor are connected to both terminals of the first resistor, respectively, the switch enable control part is connected to a control terminal of the first switch transistor, the power factor correction module, and/or the DC-DC conversion module, and the switch enable control part is configured to control the first switch transistor to be turned on or turned off.

In a possible implementation of the present disclosure, the DC-DC conversion module comprises a first bridge arm, a resonance capacitor, a resonance inductor and a transformer, the first bridge arm is connected across the terminals of the first capacitor, a terminal of the resonance capacitor is connected to an output midpoint of the first bridge arm, an other terminal of the resonance capacitor is connected to the resonance inductor, an other terminal of the resonance inductor is connected to a first terminal of a primary winding of the transformer, a second terminal of the primary winding of the transformer is connected to one of a plurality of coupling points of the first bridge arm and the first capacitor, and a secondary winding of the transformer is connected to the power output terminal.

In a possible implementation of the present disclosure, the switch enable control part further comprises a power factor correction control unit, and the power factor correction control unit is configured to output a control signal for driving the first switch transistor to be turned on based on a first voltage value of a first voltage outputted by the power factor correction module.

In a possible implementation of the present disclosure, the switch enable control part comprises a first switch control unit, a second resistor and a second capacitor, the first switch control unit comprises a signal output terminal connected to a control terminal of the DC-DC conversion module and a terminal of the second resistor, an other terminal of the second resistor is connected to a control terminal of the first switch transistor and the second capacitor, and an other terminal of the second capacitor is grounded.

In a possible implementation of the present disclosure, the switch enable control part includes a first voltage division unit, a second voltage division unit, and a third capacitor, the first voltage division unit is connected to the second voltage division unit in series and then connected to the output midpoint, a control node is formed by a connection point between the first voltage division unit and the second voltage division unit, a terminal of the third capacitor is connected to the control node, an other terminal of the third capacitor is grounded, and the control node is connected to a control electrode of the first switch transistor.

In a possible implementation of the present disclosure, the first voltage division unit comprises a third resistor, the second voltage division unit comprises a fourth resistor, the control node comprises a first node, the third resistor and the fourth resistor are connected in series and form the first node at the connection point, an other terminal of the third resistor is connected to the output midpoint, an other terminal of the fourth resistor is grounded, the terminal of the third capacitor is connected to the first node, the other terminal of the third capacitor is grounded, and the first node is connected to the control terminal of the first switch transistor.

In a possible implementation of the present disclosure, the first voltage division unit comprises a fifth resistor, the second voltage division unit comprises a second diode, the control node comprises a second node, the fifth resistor and a positive electrode of the second diode are connected in series and then connected between the output midpoint and a ground point, the second node is formed by a connection point between the fifth resistor and the positive electrode of the second diode, the terminal of the third capacitor is connected to the second node, the other terminal of the third capacitor is grounded, and the second node is connected to the control electrode of the first switch transistor.

In a possible implementation of the present disclosure, the first voltage division unit comprises a third diode, the first voltage division unit comprises a fourth diode, the control node comprises a third node, a negative electrode of the third diode and a positive electrode of the fourth diode are connected in series and form the third node at the connection point, a positive electrode of the third diode is connected to the output midpoint, a negative electrode of the fourth diode is grounded, the terminal of the third capacitor is connected to the third node, the other terminal of the third capacitor is grounded, and the third node is connected to the control electrode of the first switch transistor.

In a second aspect, the present disclosure provides a power adapter, comprising the power circuit in the first aspect.

### BENEFICIAL EFFECT

According to the present disclosure, when the power factor correction module is started, that is, when the power switch transistor is turned on, a power signal passes through the first inductor, and the current in the first inductor rises. At this time, since the resistance value of the rheostat unit is a first resistance value, the overcurrent protection point is low, so that a relatively small starting current is ensured, thereby preventing from triggering overcurrent protection of the power circuit. When the start of the power factor correction module is completed, the resistance value of the rheostat unit is converted to the second resistance value, where the second resistance value is less than the first resistance value. At this time, the overcurrent protection point becomes relatively high, so that it is ensured that the power circuit can output at full load when connected to an external power, thereby solving a problem that the overcurrent protection point is too low to implement the full power output of the power circuit.

### BRIEF DESCRIPTION OF THE DRAWINGS

In order that the technical solution in the embodiments of the present disclosure may be more clearly described, reference will now be made briefly to the drawings required for the description of the embodiments. It will be apparent that the drawings in the description below are merely some of the embodiments of the present invention, and other drawings may be made to those skilled in the art without involving any inventive effort.
FIG. 1 is a schematic diagram of an example structure of a power circuit according to an embodiment of the present disclosure.
FIG. 2 is a schematic diagram of an example structure of a power circuit according to an embodiment of the present disclosure.
FIG. 3 is a schematic diagram of an example structure of a power circuit according to an embodiment of the present disclosure.
FIG. 4 is a schematic diagram of an example structure of a power circuit according to an embodiment of the present disclosure.
FIG. 5 is a schematic diagram of an example structure of a power circuit according to an embodiment of the present disclosure.
FIG. 6 is a schematic diagram of an example structure of a power circuit according to an embodiment of the present disclosure.
FIG. 7 is a schematic diagram of an example structure of a power circuit according to an embodiment of the present disclosure.

### DETAILED DESCRIPTION OF THE EMBODIMENTS

In the following, the technical solutions in the embodiments of the present disclosure will be clearly and completely described in connection with the accompanying drawings in the embodiments of the present disclosure. It will be apparent that the described embodiments are merely a part of the embodiments of the present disclosure, rather than all the embodiments. Based on the embodiments in the present disclosure, all other embodiments obtained by a person skilled in the art without involving any inventive effort are within the scope of the present disclosure.

In the description of the present disclosure, it is to be understood that the terms "first" and "second" are used for descriptive purposes only and are not to be construed as indicating or implying relative importance or implying the number of indicated technical features. Thus, the features limited by "first" and "second" may explicitly or implicitly include one or more of the features. In the description of the present disclosure, "plurality" means two or more, unless expressly and specifically defined otherwise.

In the present disclosure, the term "exemplary" is used to mean "used as an example, illustration, or illustration." Any embodiment described as "exemplary" herein is not necessarily to be construed as preferred or advantageous over other embodiments. To enable any person skilled in the art to make and use the present disclosure, the following description is given. In the following description, details are set forth for purposes of explanation. It will be appreciated by those of ordinary skill in the art that the present disclosure may be implemented without these specific details. In other instances, well-known structures and procedures will not be set forth in detail so as not to obscure the description of the present disclosure with unnecessary detail. Thus, the present disclosure is not intended to be limited to an embodiments shown, but is to be consistent with the widest scope of the principles and features disclosed herein.

A power circuit and a power adapter according an embodiment of the present disclosure are described in detail below.

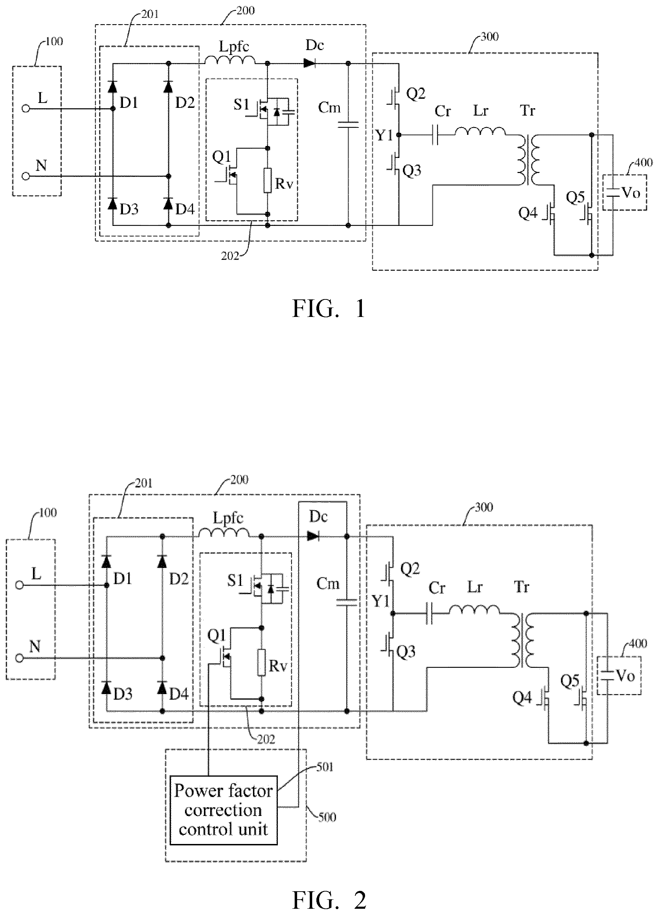

In one aspect, as shown in FIG. 1, a power circuit according to an embodiment of the present disclosure includes a power input terminal 100, a power factor correction module 200, a DC-DC conversion module 300, and a power output terminal 400 which are connected in sequence, where the power input terminal 100 includes a zero line N and a live line L.

The power factor correction module 200 includes an input rectifier unit 201, a first inductor Lpfc, a first diode Dc, a first capacitor Cm, a power switch transistor S1, and a rheostat unit 202. The first inductor Lpfc and the positive electrode of the first diode Dc connected in series is connected to the first output node of the input rectifier unit 201. Both terminals of the first capacitor Cm are connected to the negative electrode of the first diode Dc and a second output node of the input rectifier unit 201, respectively. The power switch transistor S1 and the rheostat unit 202 are connected in series between the positive electrode of the first diode Dc and the second output node.

When the start of the power factor correction module 200 is completed, the resistance value of the rheostat unit 202 is changed from the first resistance value to the second resistance value, and the second resistance value is less than the first resistance value.

In the present disclosure, when the power circuit is in an initial state, that is, when the power factor correction module 200 is not started and the DC-DC conversion module 300 is not started, the resistance value of the rheostat unit 202 is a first resistance value. When the power factor correction module 200 is started, the DC-DC conversion module 300 is not started, and the power switch transistor S1 is turned on, a power signal passes through the first inductor Lpfc, and the current in the first inductor Lpfc rises. At this time, since the resistance value of the rheostat unit 202 is kept at the first resistance value, the overcurrent protection point is low, so that a relatively small starting current is ensured, thereby preventing from triggering overcurrent protection of the power circuit. When the start of the power factor correction module 200 is completed, that is, when the start of the power factor correction module 200 is completed and the condition for starting the DC-DC conversion module 300 is reached, the resistance value of the rheostat unit is converted to the second resistance value, where the second resistance value is less than the first resistance value. At this time, the overcurrent protection point becomes relatively high, so that it is ensured that the power circuit can output at full load when connected to an external power, thereby solving a problem that the overcurrent protection point is too low to implement the full power output of the power circuit.

In a possible embodiment, the input rectifier unit 201 is connected to the power input terminal 100 for rectifying the power input signal. Specifically, the input rectifier unit 201 includes a full-wave rectifier bridge including diodes D1~D4. The connection point between the negative electrode of the diode D1 and the negative electrode of the diode D2 forms the first output node of the input rectifier unit, and the connection point between the positive electrode of the diode D3 and the positive electrode of the diode D4 forms the second output node of the input rectifier unit. After the power signal is input to the input rectifier unit 201 through the power input terminal 100, the first output node and the second output node output the rectified power signal. The input rectifier unit 201 may also be another rectifier circuit, which is merely illustrated here and is not unduly limited thereto.

After one terminal of the first inductor Lpfc is connected to the first output node of the input rectifier unit 201, and the other terminal of the first inductor Lpfc is connected in series with the positive electrode of the first diode Dc, both terminals of the first capacitor Cm are connected to the negative electrode of the first diode Dc and the second output node of the input rectifier unit 201, respectively. In the present embodiment, the first inductor Lpfc is an energy storage inductor, and the first capacitor Cm is a filter capacitor. When the power switch transistor S1 is turned on, the rectified power signal passes through the first inductor Lpfc, and the current in the first inductor Lpfc rises. When the power switch transistor S1 is turned off, the current stored in the first inductor Lpfc charges the first capacitor Cm through the first diode Dc. When the voltage across the first capacitor Cm reaches a predetermined value, the DC-DC conversion module 300 is driven to start.

In a possible embodiment, in the power factor correction module 200, the position relationship between the rheostat unit 202 and the power switch transistor S1 may be that the rheostat unit 202 is connected to the second output node of the input rectifier unit 201, and the power switch transistor S1 is connected between the rheostat unit 202 and the positive electrode of the first diode Dc, and also may be that the first terminal of the power switch transistor S1 is connected to the second output node of the input rectifier unit 201, and the rheostat unit 202 is connected between the second terminal of the power switch transistor S1 and the positive electrode of the first diode Dc. The arrangement positions of the rheostat unit and the power switch transistor in the power factor correction module are not specifically limited herein.

In a possible embodiment, for ease of understanding, the positional relationship between the rheostat unit 202 and the power switch transistor S1 may be as shown in FIG. 1. Specifically, the rheostat unit 202 further includes a first switch transistor Q1, a first resistor Rv, and a switch enable control part 500. The first terminal and the second terminal of the first switch transistor Q1 are connected to both terminals of the first resistor Rv, respectively. The switch enable control part 500 is connected to the control terminal of the first switch transistor Q1, the power factor correction module 200, and/or the DC-DC conversion module 300. The switch enable control part 500 is used for controlling the first switch transistor Q1 to be turned on or off.

In an application, when the power factor correction module 200 is started and the DC-DC conversion module 300 is not started, the power switch transistor S1 is turned on. In this case, the first switch transistor Q1 is in an off state which is initially set. The current overcurrent protection point of the power factor correction module 200 is determined by a first resistance value, that is, the resistance value of the sampling resistance Rv. Since the resistance value of the sampling resistance Rv is large, the overcurrent protection point is low, and the current in the power circuit is small, that is, the current flowing through the power switch transistor S1 is small, thereby ensuring a relatively small start current. When the voltage value of the first voltage reaches the set voltage value for starting the DC-DC conversion module 300, the switch enable control part 500 controls the first switch transistor Q1 to be turned on. In this case, the current overcurrent protection point of the power factor correction module 200 is determined by the second resistance value, which is the parallel value of the sampling resistance Rv and the turn-on resistance value of the first switch transistor Q1. Since the parallel value of the sampling resistance Rv and the turn-on resistance value of the first switch transistor Q1 is less than the resistance value of only the sampling resistor Rv, the over-current protection point becomes high, so that a large current can flow through the power circuit, that is, a large current can flow through the power switch transistor S1, thereby ensuring that the power circuit can output at full load when connected to an external power.

In a possible embodiment, the DC-DC conversion module 300 comprises a first bridge arm, a resonance capacitor Cr, a resonance inductor Lr, and a transformer Tr. The first bridge arm is connected across both terminals of the first capacitor Cm. The first bridge arm includes a half bridge arm including a second switch transistor Q2 and a third switch transistor Q3 connected in series. The coupling point between the second switch transistor Q2 and the third switch transistor Q3 is the output midpoint Y1. Specifically, the source of the second switch transistor Q2 is connected to one terminal of the first capacitor Cm, the drain of the second switch transistor Q2 is connected to the source of the first switch transistor Q1, and the drain of the second switch transistor Q2 is connected to the other terminal of the first capacitor Cm.

One terminal of the resonance capacitor Cr is connected to the output midpoint Y1 of the first bridge arm, the other terminal of the resonance capacitor Cr is connected to the resonance inductor Lr. The other terminal of the resonance inductor Lr is connected to the first terminal of the primary winding of the transformer Tr, and the second terminal of the primary winding of the transformer Tr is connected to one of the coupling points of the first bridge arm and the filter capacitor Cm. The secondary winding of the transformer Tr is connected to the power output terminal.

In a possible embodiment, the DC-DC conversion module further includes an output rectifier unit connected between the secondary winding of the transformer and the power output terminal for rectifying the power signal output by the transformer. The output rectifier unit include a rectifier circuit including a fourth switch transistor Q4 and a fifth switch transistor Q5.

In an application, when the voltage across the first capacitor Cm reaches a preset voltage value, by controlling the second switch transistor Q2 and the third switch transistor Q3 to be alternately turned on and off, the voltage at the output midpoint Y1 is a square wave voltage whose waveform is a square wave from 0V to the preset voltage value. At this time, the resonance capacitor Cr and the resonance inductor Lr work together to form a resonance cavity, which is connected to the transformer Tr, and rectified by the output rectifier unit to provide an output power signal to the power output terminal 400. For example, when the voltage across the first capacitor Cm reaches 400V, the second switch transistor Q2 and the third switch transistor Q3 are alternately turned on and off, so that a square wave voltage of 0 V to 400V is outputted at the output midpoint Y1, and the transformer Tr is driven to output a voltage to the power output terminal 400. In an embodiment, the preset voltage value is not specifically limited, and may be adjusted according to actual situations.

In the present disclosure, each of the power switch transistor S1, the first switch transistor Q1, the second switch transistor Q2, and the third switch transistor Q3 may be a triode, a Metal-Oxide-Semiconductor Field-Effect Transistor (MOSFET), a thyristor, or other device capable of realizing a switch function, which is not specifically limited herein and may be adjusted based on actual situations.

As shown in FIG. 2, the switch enable control part 500 includes a power factor correction control unit 501 for outputting a control signal for driving the first switch transistor Q1 to be turned on based on whether the first voltage value of the first voltage outputted by the power factor correction module 200 reaches the set voltage value for starting the DC-DC conversion module 300.

In the present embodiment, the first voltage value of the power signal outputted by the power factor correction module 200 may be a bus voltage across the bus capacitor Cm. As shown in FIG. 2, the voltage across the first capacitor Cm is detected by the power factor correction control unit 501, that is, the first voltage value of the first voltage is obtained.

In the actual application, the power circuit is provided with the power factor correction control unit 501 for controlling the operation of the power factor correction module 200. Therefore, in the present embodiment, the first voltage value of the power signal outputted by the power factor correction module 200 is detected directly by the power factor correction control unit 501. When the first voltage value meets the preset voltage value, the power factor correction control unit 501 outputs a control signal for driving the first switch transistor Q1 to be turned on, thereby implementing full power output of the power circuit.

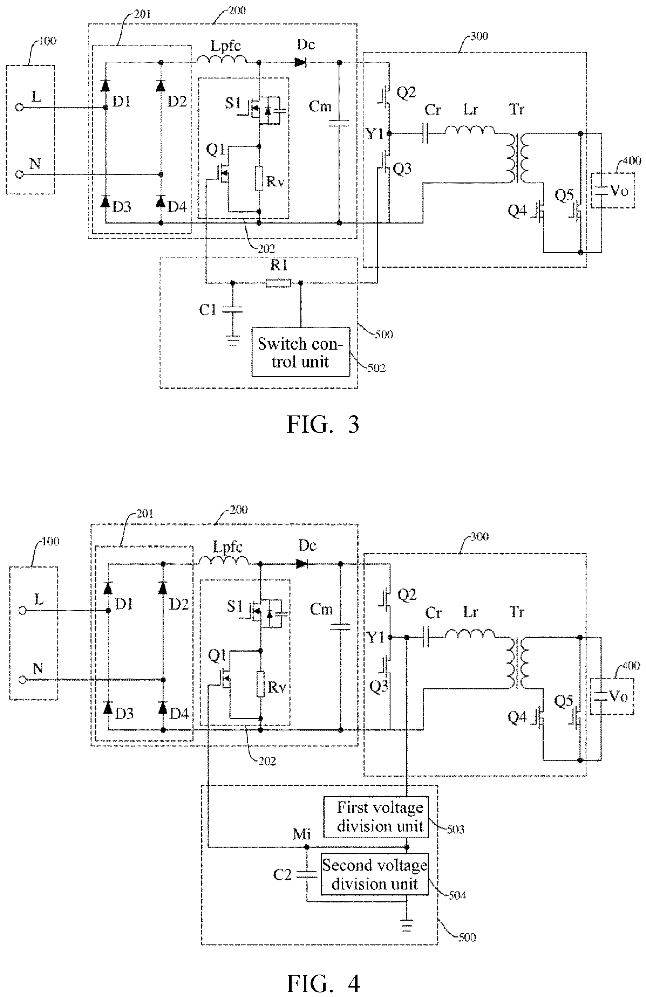

In another embodiment of the present disclosure, as shown in FIG. 3, the switch enable control part 500 includes a first switch control unit 502, a second resistor R1, and a second capacitor C1. The first switch control unit 502 includes a signal output terminal connected to the control terminal of the DC-DC conversion module and one terminal of the second resistor R1. Specifically, the DC-DC conversion module includes a third switch transistor Q3, and the control terminal of the DC-DC conversion module includes the control terminal of the third switch transistor Q3. That is, the signal output terminal is connected to the control terminal of the third switch transistor Q3 and one terminal of the second resistor R1. The other terminal of the second resistor R1 is connected to the control terminal of the first switch transistor Q1 and the second capacitor C1, and the other terminal of the second capacitor C1 is grounded.

In the present embodiment, when the first voltage outputted by the power factor correction module satisfies the preset voltage value, it is necessary to control the second switch transistor Q2 and the third switch transistor Q3 to be alternately turned on and turned off to drive the DC-DC conversion module to start. Therefore, when the switch control unit 502 outputs a drive signal to drive the third switch transistor Q3 to operate, the first switch transistor Q1 is also driven by the drive signal to operate, thereby implementing the full power output of the power circuit.

In another embodiment of the present disclosure, as shown in FIG. 4, the switch enable control part 500 includes a first voltage division unit 503, a second voltage division unit 504, and a third capacitor C2. The first voltage division unit 503 and the second voltage division unit 504 connected in series is connected to the output midpoint Y1. The connection point between the first voltage division unit 503 and the second voltage division unit 504 forms a control node Mi. One terminal of the third capacitor C2 is connected to the control node Mi, and the other terminal of the third capacitor C2 is grounded. The control node Mi is connected to the control terminal of the first switch transistor Q1.

In the present embodiment, after the bus voltage output by the power factor correction module satisfies the preset voltage value, the square wave voltage at the output midpoint Y1 is divided by the first voltage division unit 503 and the second voltage division unit 504, and the third capacitor C2 is charged by the divided voltage signal, so that the voltage value satisfying the turn-on condition of the first switch transistor Q1 is formed at the control node Mi, and the first switch transistor Q1 is driven to be turned on, thereby implementing full power output of the power circuit.

In the present embodiment, the circuit including the first voltage division unit 503 and the second voltage division unit 504 may be a circuit including two resistors, a circuit including two diodes, or a circuit including a combination of the two types of components. For ease of understanding, the circuits adopted by the first voltage division unit 503 and the second voltage division unit 504 will be described in detail below.

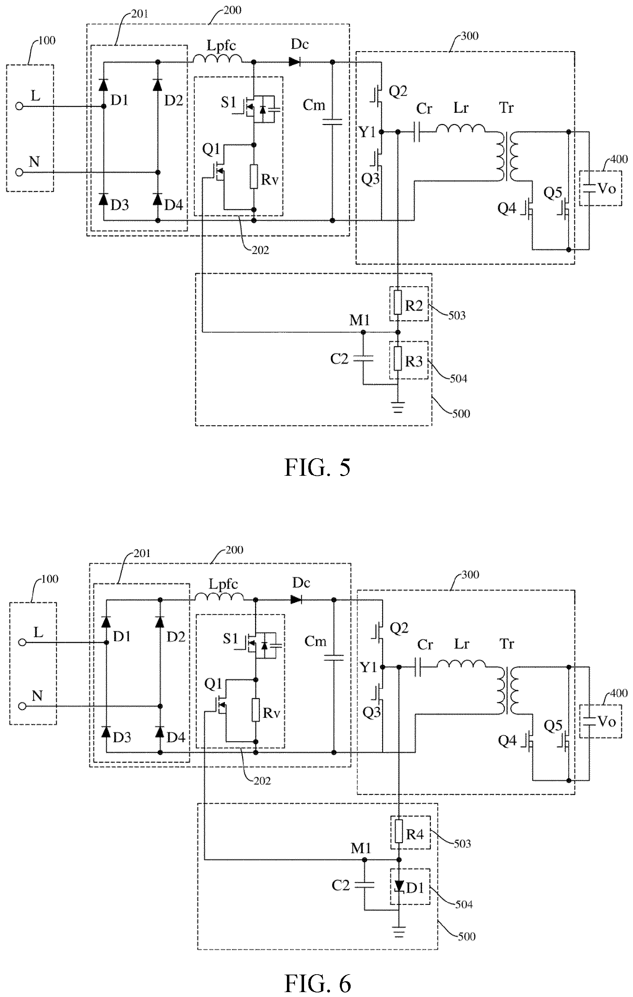

In another embodiment of the present disclosure, as shown in FIG. 5, the first voltage division unit 503 includes a third resistor R2, and the second voltage division unit 504 includes a fourth resistor R3. The control node Mi includes a first node M1, and the third resistor R2 and the fourth resistor R3 are connected in series and form the first node M1 at the connection point. The other terminal of the third resistor R2 is connected to the output midpoint Y1, and the other terminal of the fourth resistor R3 is grounded. One terminal of the third capacitor C2 is connected to the first node M1. The other terminal of the third capacitor C2 is grounded. The first node M1 is connected to the control terminal of the first switch transistor Q1.

In the present embodiment, after the bus voltage outputted by the power factor correction module meets the preset voltage value, it is divided by the third resistor R2 and the fourth resistor R3, and the third capacitor C2 is charged by the divided voltage signal, so that the voltage value satisfying the turn-on condition of the first switch transistor Q1 is formed at the first node M1, and the first switch transistor Q1 is driven to be turned on, thereby implementing full power output of the power circuit.

In another embodiment of the present disclosure, as shown in FIG. 6, the first voltage division unit 503 includes a fifth resistor R4, and the second voltage division unit 504 includes a second diode D1. The control node Mi includes a second node M2. The fifth resistor R4 and the positive electrode of the second diode D1 connected in series is connected between the output midpoint Y1 and the ground point. The connection point between the fifth resistor R4 and the positive electrode of the second diode D1 forms the second node M2. One terminal of the third capacitor C2 is connected to the second node M2, and the other terminal of the third capacitor C2 is grounded. The second node M2 is connected to the control electrode of the first switch transistor Q1. The second diode D1 is a voltage stabilizing diode.

The position relationship between the fifth resistor R4 and the second diode D1 may be that one terminal of the fifth resistor R4 is connected to the output midpoint Y1, and the other terminal of the fifth resistor R4 is connected to the positive electrode of the second diode D1, and also may be that the positive electrode of the second diode D1 is connected to the output midpoint Y1, and the negative electrode of the second diode D1 is connected to the fifth resistor R4. The arrangement positions of the rheostat unit and the power switch transistor in the power factor correction module is not specifically limited herein. For ease of understanding, the scheme shown in FIG. 6 is adopted in this embodiment, that is, the other terminal of the fifth resistor R4 is connected to the output midpoint Y1, the negative electrode of the second diode D1 is grounded, and one terminal of the fifth resistor R4 and the positive electrode of the second diode D1 are connected in series and forms the second node M2 at the connection point.

In this embodiment, after the bus voltage outputted by the power factor correction module meets the preset voltage value, it is divided by the fifth resistor R4 and the second diode D1, and the third capacitor C2 is charged by the divided voltage signal, so that the voltage value satisfying the turn-on condition of the first switch transistor Q1 is formed at the second node M2, and the first switch transistor Q1 is driven to be turned on, thereby implementing full power output of the power circuit.

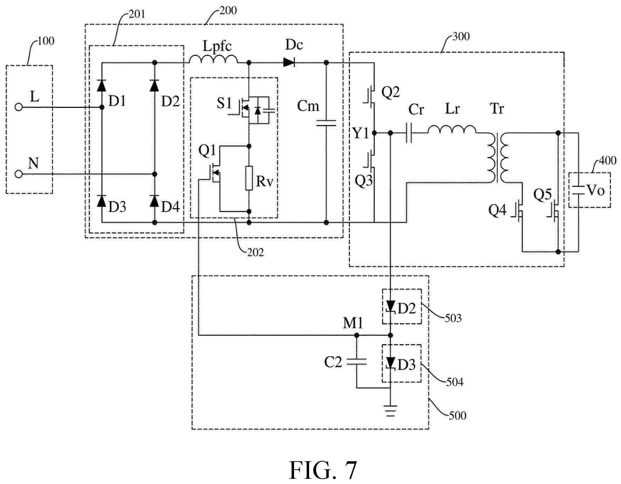

In another embodiment of the present disclosure, as shown in FIG. 7, the first voltage division unit 503 includes a third diode D2, and the first voltage division unit 503 includes a fourth diode D3. The control node Mi includes a third node M3. The negative electrode of the third diode D2 and the positive electrode of the fourth diode D3 are connected in series and forms the third node M3 at the connection point. The positive electrode of the third diode D2 is connected to the output midpoint Y1. The negative electrode of the fourth diode D3 is grounded. One terminal of the third capacitor C2 is connected to the third node M3, and the other terminal of the third capacitor C2 is grounded. The third node M3 is connected to the control terminal of the first switch transistor Q1. The third diode D2 and the fourth diode D3 are zener diodes.

In the present embodiment, after the bus voltage outputted by the power factor correction module meets the preset voltage value, it is by the third diode D2 and the fourth diode D3, and the third capacitor C2 is charged by the divided voltage signal, so that a voltage value satisfying the turn-on condition of the first switch transistor Q1 is formed at the third node M3, and the first switch transistor Q1 is driven to be turned on, thereby implementing full power output of the power circuit.

In another embodiment of the present disclosure, a power adapter according to the present disclosure includes the power circuit described above.

The foregoing describes in detail a power circuit and a power adapter according to an embodiment of the present disclosure. Specific examples are used herein to illustrate the principles and embodiments of the present disclosure. The description of the above embodiments is merely provided to assist in understanding the method of the present disclosure and the core concepts thereof. Also, variations will occur to those skilled in the art in both the detailed description and the scope of application in accordance with the teachings of the present disclosure. In view of the foregoing, the present description should not be construed as limiting the application.

## Claims

1. A power circuit, comprising a power input terminal, a power factor correction module, a DC-DC conversion module, and a power output terminal connected in sequence,
wherein the power factor correction module comprises an input rectifier unit, a first inductor, a first diode, a first capacitor, a power switch transistor and a rheostat unit, wherein the first inductor is connected to a positive electrode of the first diode in series and then connected to a first output node of the input rectifier unit, both terminals of the first capacitor are connected to a negative electrode of the first diode and a second output node of the input rectifier unit, respectively, and the power switch transistor and the rheostat unit are connected in series and then connected between the positive electrode of the first diode and the second output node;
wherein when a start of the power factor correction module is completed, a resistance value of the rheostat unit is changed from a first resistance value to a second resistance value which is less than the first resistance value.

2. The power circuit according to claim 1, wherein the rheostat unit further comprises a first switch transistor, a first resistor, and a switch enable control part, the first switch transistor has a first terminal and a second terminal respectively connected to both terminals of the first resistor, the switch enable control part is connected to at least one of a control terminal of the first switch transistor, the power factor correction module or the DC-DC conversion module, and configured to control the first switch transistor to be turned on/off.

3. The power circuit according to claim 2, wherein the DC-DC conversion module comprises a first bridge arm, a resonance capacitor, a resonance inductor and a transformer, the first bridge arm is connected across the terminals of the first capacitor, a terminal of the resonance capacitor is connected to an output midpoint of the first bridge arm, an other terminal of the resonance capacitor is connected to the resonance inductor, an other terminal of the resonance inductor is connected to a first terminal of a primary winding of the transformer, a second terminal of the primary winding of the transformer is connected to one of a plurality of coupling points of the first bridge arm and the first capacitor, and a secondary winding of the transformer is connected to the power output terminal.

4. The power circuit according to claim 3, wherein the switch enable control part further comprises a power factor correction control unit, and
the power factor correction control unit is configured to output a control signal for driving the first switch transistor to be turned on based on a first voltage value of a first voltage outputted by the power factor correction module.

5. The power circuit according to claim 3, wherein the switch enable control part comprises a first switch control unit, a second resistor and a second capacitor, the first switch control unit has a signal output terminal connected to a control terminal of the DC-DC conversion module and a terminal of the second resistor, an other terminal of the second resistor is connected to a control terminal of the first switch transistor and the second capacitor, and an other terminal of the second capacitor is grounded.

6. The power circuit according to claim 3, wherein the switch enable control part includes a first voltage division unit, a second voltage division unit, and a third capacitor, the first voltage division unit is connected to the second voltage division unit in series and then connected to the output midpoint, a control node is formed by a connection point between the first voltage division unit and the second voltage division unit, a terminal of the third capacitor is connected to the control node, an other terminal of the third capacitor is grounded, and the control node is connected to a control electrode of the first switch transistor.

7. The power circuit according to claim 6, wherein the first voltage division unit comprises a third resistor, the second voltage division unit comprises a fourth resistor, the control node comprises a first node, the third resistor and the fourth resistor are connected in series and form the first node at the connection point, an other terminal of the third resistor is connected to the output midpoint, an other terminal of the fourth resistor is grounded, the terminal of the third capacitor is connected to the first node, the other terminal of the third capacitor is grounded, and the first node is connected to the control terminal of the first switch transistor.

8. The power circuit according to claim 6, wherein the first voltage division unit comprises a fifth resistor, the second voltage division unit comprises a second diode, the control node comprises a second node, the fifth resistor and a positive electrode of the second diode are connected in series and then connected between the output midpoint and a ground point, the second node is formed by a connection point between the fifth resistor and the positive electrode of the second diode, the terminal of the third capacitor is connected to the second node, the other terminal of the third capacitor is grounded, and the second node is connected to the control electrode of the first switch transistor.

9. The power circuit according to claim 6, wherein the first voltage division unit comprises a third diode, the first voltage division unit comprises a fourth diode, the control node comprises a third node, a negative electrode of the third diode and a positive electrode of the fourth diode are connected in series and form the third node at the connection point, a positive electrode of the third diode is connected to the output midpoint, a negative electrode of the fourth diode is grounded, the terminal of the third capacitor is connected to the third node, the other terminal of the third capacitor is grounded, and the third node is connected to the control electrode of the first switch transistor.

10. A power adapter, comprising the power circuit according to any one of claims 1 to 9.
